# EUROPÄISCHE PATENTSCHRIFT

(11) **EP 0 649 588 B1**
(45) Veröffentlichungstag und Bekanntmachung des Hinweises auf die Patenterteilung: **02.01.1997**
(21) Anmeldenummer: 93914687.4
(22) Anmeldetag: 22.06.1993
(51) Int. Cl.: H04S 3/00, H04H 5/00, H04B 1/66

(54) **ÜBERTRAGUNG UND SPEICHERUNG VON MEHRKANALIGEN TONSIGNALEN BEI ANWENDUNG VON BITRATENREDUZIERENDEN CODIERVERFAHREN**
TRANSMISSION AND STORAGE OF MULTI-CHANNEL AUDIO-SIGNALS WHEN USING A BIT RATE-REDUCING CODING PROCESS
TRANSMISSION ET MEMORISATION DE SIGNAUX AUDIO MULTICANAUX EN UTILISANT UN PROCEDE DE CODAGE REDUISANT LE DEBIT BINAIRE

(30) Priorität: 10.07.1992 DE 4222623
(43) Veröffentlichungstag der Anmeldung: 26.04.1995
(73) Patentinhaber: Institut für Rundfunktechnik GmbH, D-80939 München (DE)
(72) Erfinder: SEDLMEYER, Robert, D-85737 Ismaning (DE)
(74) Vertreter: Konle, Tilmar, Dipl.-Ing.
(86) Internationale Anmeldenummer: EP9301582
(87) Internationale Veröffentlichungsnummer: WO9401980

(56) Entgegenhaltungen:
- DE-A- 3 639 753
- RUNDFUNKTECHNISCHE MITTEILUNGEN Bd. 35, Nr. 1 , Januar 1991 , NORDERSTEDT DE Seiten 10 - 16 WARNER R. TH. TEN KATE ET AL. 'EINE NEUE CODIERTECHNIK FÜR SURROUND-STEREO-SURROUND(4-2-4)'
- ICASSP 92 IEEE INTERNATIONAL CONFERENCE ON ACOUSTICS, SPEECH AND SIGNAL PROCESSING Bd. 2 , 23. März 1992 , SAN FRANCISCO, US Seiten 205 - 208 W.R.TH TEN KATE ET AL. 'MATRIXING OF BIT RATE REDUCED AUDIO SIGNALS'
- HDTV 90 FOURTH INTERNATIONAL COLLOQUIUM ON ADVANCED TELEVISION SYSTEMS 25. Juni 1990 , OTTAWA, CA Seiten 3A.7.2 - 3A.7.14 'A SOUND REPRODUCTION AND TRANSMISSION SYSTEM FOR HDTV'
- ICASSP 92 IEEE INTERNATIONAL CONFERENCE ON ACOUSTICS, SPEECH AND SIGNAL PROCESSING Bd. 2 , 23. März 1992 , SAN FRANCISCO, US Seiten 569 - 572 J. D. JOHNSTON ET AL. 'SUM - DIFFERENCE TRANSFORM CODING'
- ICASSP 89 IEEE INTERNATIONAL CONFERENCE ON ACOUSTICS, SPEECH AND SIGNAL PROCESSING Bd. 3 , 23. Mai 1989 , GLASGOW, GB Seiten 1993 - 1996 JAMES D. JOHNSTON 'PERCEPTUAL TRANSFORM CODING OF WIDEBAND STEREO SIGNALS'
- ICASSP 92 IEEE INTERNATIONAL CONFERENCE ON ACOUSTICS, SPEECH AND SIGNAL PROCESSING Bd. 2 , 23. March 1992 , SAN FRANCISCO, US Seiten 569 - 572 J. D. JOHNSTON ET AL. 'SUM - DIFFERENCE TRANSFORM CODING'

## Beschreibung

Für die Übertragung und Speicherung von Tonsignalen in digitaler Form sind bisher zur Bitratenreduzierung verschiedene Codierverfahren (DE-A-3639753) bekannt, die zur Codierung eines monophonen oder stereophonen Tonkanals herangezogen werden. Wenn zwei zusammengehörige Tonkanäle in ihrer Bitrate reduziert werden sollen, so kann jeder Einzelkanal für sich allein einer bitratenreduzierenden Codierung unterzogen und anschließend übertragen oder gespeichert werden. Die Bitratenreduzierung kann jedoch effektiver gemacht werden, indem nicht nur die Verdeckungseigenschaften des menschlichen Gehörs in jedem einzelnen Tonkanal für sich genommen zur Bitratenreduktion genutzt werden, sondern darüberhinaus auch die Trägheit der Gehörempfindung bei stereophonem Hören sowie die stereophonen Verdeckungseigenschaften des menschlichen Gehörs genutzt werden (NL-A-9000338).

Für manche Anwendungen (wie beispielsweise für kommende HDTV-Anwendungen) besteht jedoch die Intention, mehr Tonkanäle als die bisher üblichen zwei eines stereophonen Signals zu übertragen, aufzuzeichnen bzw. wiederzugeben. In so einem Fall können natürlich alle Tonkanäle einzeln einer bitratenreduzierenden Codierung unterzogen werden, bevor sie übertragen oder gespeichert werden. Trotzdem steigt die zur Übertragung der mehrkanaligen Tonsignale erforderliche Bitrate analog zur Anzahl der zu übertragenden Kanäle. Dieser Umstand führt aufgrund der sehr hohen Kosten für die zusätzlich erforderliche Kanalkapazizät gegenüber stereophoner Übertragung nicht zu einer einfachen Durchsetzbarheit eines solchen mehrkanaligen Übertragungsverfahrens.

Die Aufgabe der Erfindung besteht darin, ein Verfahren zu schaffen, das bei einer Erweiterung der Kanalzahl nur einen verhältnismäßig geringen Zuwachs an Datenrate erfordert.

Diese Aufgabe wird erfindungsgemäß durch die kennzeichnenden Merkmale des Anspruchs 1 gelöst.

Vorteilhafte Weiterbildungen und Ausgestaltungen des erfindungsgemäßen Verfahrens, welche eine Kompatibilität zu bestehenden Systemen gewährleisten, ergeben sich aus den Unteransprüchen.

Die Erfindung beruht auf der Überlegung, bei einer Erweiterung der zu übertragenden Kanalzahl auf mehr als nur zwei Tonkanäle für die Codierung dieser Tonkanäle über die Verdeckungseigenschaften im Einzelkanal oder Stereokanal hinausgehend die Verdeckungseigenschaften des menschlichen Gehörs noch weitergehend zu nutzten. Es kann hierbei für jeden einzelnen der zu übertragenden oder zu speichernden Tonkanäle die Verdeckung durch alle anderen Tonsignale ausgenutzt werden.

Durch eine derartige Vorgehensweise kann bei Verwendung einer geeigneten Codierung die Datenrate zur Übertragung der zusätzlichen Tonkanäle, die über die normalerweise zu übertragenden zwei Basis-Tonkanäle eines Stereo-Signales hinausgehen, stark reduziert werden.

Für diese zusätzlichen Tonkanäle werden dann nur diejenigen Anteile der jeweiligen Tonsignale übertragen,
- die nicht durch die Tonsignale anderer Tonkanäle verdeckt werden, und
- diese Anteile werden nur mit einer so geringen Auflösung und damit auch Datenrate übertragen, daß das durch die Quantisierung erzeugte Quantisierungsrauschen verdeckt bleibt.

Bei der Anwendung eines Teilband-Codierverfahrens können die zu übertragenden Anteile von den nicht zu übertragenden Anteilen getrennt werden, indem teilbandweise darüber entschieden wird, während bei der Anwendung eines Transformations-Codierverfahrens nach den einzelnen spektralen Linien aussortiert werden kann.

Die Erfindung wird nachfolgend anhand der in den Zeichnungen veranschaulichten Ausführungsbeispiele näher erläutert. Es zeigt:
- Fig. 1: ein Blockschaltbild eines Quellencoders für mehrkanalige Tonsignale zur quellenseitigen Durchführung des erfindungsgemäßen Verfahrens,
- Fig. 2: ein Blockschaltbild eines Quellendecoders für mehrkanalige Tonsignale zur senkenseitigen Durchführung des erfindungsgemäßen Verfahrens,
- Fig. 3: ein Blockschaltbild eines weiteren Quellencoders für mehrkanalige Tonsignale zur quellenseitigen Durchführung des erfindungsgemäßen Verfahrens, wobei die quellencodierten Tonsignale von bereits existierenden, nach bekannten Verfahren arbeitenden stereophonen Quellendecodern decodierbar sind,
- Fig. 4: ein Blockschaltbild eines bekannten stereophonen Quellendecoders, der zur kompatiblen stereophonen Decodierung der von dem Quellendecoder nach Fig. 3 codierten, mehrkanaligen Tonsignale geeignet ist, und
- Fig. 5: ein Blockschaltbild eines mehrkanaligen Quellendecoders, der zur Decodierung sowohl der von dem Quellencoder nach Fig. 3 codierten, mehrkanaligen Tonsignale als auch zur Decodierung der von bekannten, nach bitratenreduzierenden Verfahren arbeitenden Quellencodern codierten stereophonen Tonsignale geeignet ist.

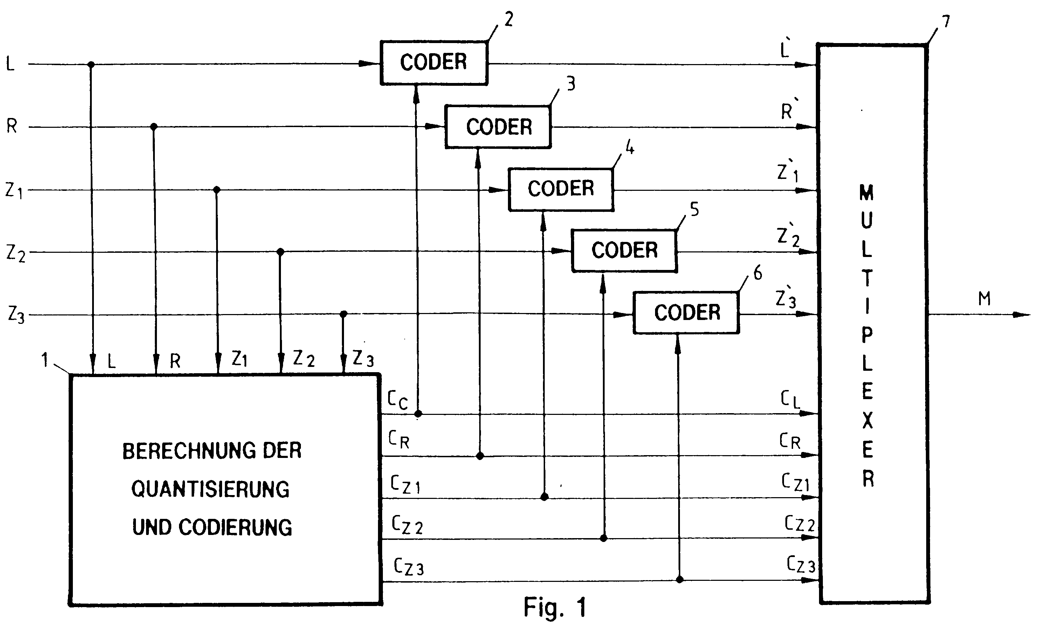

In Fig. 1 ist ein Blockschaltbild eines erfindungsgemäßen Quellencoders beispielhaft für fünf Tonkanäle L, R, Z1, Z2 und Z3 dargestellt. Die beiden Tonsignale L und R eines stereophonen Tonsignales, sowie die zusätzlich zu übertragenden Tonsignale Z1, Z2 und Z3 werden in Block 1 nach psychoakustischen Grundsätzen auf ihre gegenseitige spektrale und pegelmäßige Verdeckungschwelle hin untersucht, wodurch für jedes einzelne Tonsignal jeweils eine Codiervorschrift CL, CR, CZ1, CZ2 und CZ3 gewonnen wird. Diese Codiervorschriften werden an Coder 2 .. 6 weitergegeben, die damit in der Lage sind, die jeweiligen Tonsignale L, R, Z1, Z2 und Z3 zu codieren. Bei der Codierung werden die codierten und in ihrer Datenrate reduzierten Tonsignale L', R', Z1', Z2' und Z3' erzeugt, welche nur noch diejenigen Signalanteile enthalten, die trotz gegenseitiger Verdeckung bei der Wiedergabe notwendig sind. Diese codierten Signale werden dann üblicherweise von einem Multiplexer 7 in ein für die Übertragung geeignetes Multipexsignal M gebracht, wobei die Codiervorschriften CL, CR, CZ1, CZ2 und CZ3 von dem Multiplexer 7 mitverwendet werden.

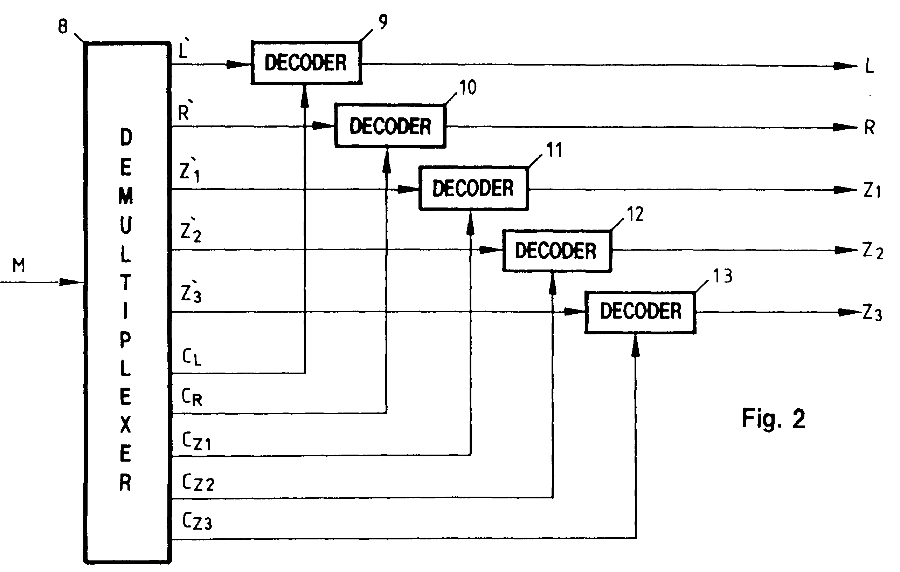

In Fig. 2 ist ein Blockschaltbild eines erfindungsgemäßen Quellendecoders dargestellt. Das übertragene oder gespeicherte Multiplexsignal M aus dem Multiplexer 7 von Fig. 1 wird im Demultiplexer 8 in die codierten Tonsignale L', R', Z1', 22', Z3' sowie die Codiervorschriften CL, CR, CZ1, CZ2 und CZ3 zerlegt. Die nachfolgenden Decoder 9 .. 13 rekonstruieren anschließend die ursprünglichen Tonsignale L, R, Z1, Z2 und Z3, unter Verwendung der zugeordneten Codiervorschriften.

Im folgenden soll auf die Kompatibilität zu monophonen und stereophonen Codierverfahren näher eingegangen werden.

In der Praxis werden bereits monophone und stereophone Übertragungen mit verschiedenen Codierverfahren angewandt. Für digitalen Hörrundfunk (Digital Audio Broadcasting, kurz DAB) ist man bei CCIR gegenwärtig dabei, unter anderem eine Quellencodier-Vorschrift für monophone und stereophone Tonsignale zu normieren.

Ein Codierverfahren, das zur Übertragung und Speicherung von mehrkanaligen Tonsignalen mit mehr als zwei Tonkanälen dienen soll, muß somit in vielen Fällen zu bereits bestehenden Verfahren kompatibel sein. Dies führt dazu, daß ein ausgesendetes mehrkanaliges Tonsignal am Empfangsort sowohl mit bestehenden stereophonen digitalen Decodern, als auch mit eventuellen mehrkanaligen Decodern verarbeitbar sein muß. Weiterhin muß ein solches Signal sowohl mit der üblichen stereophonen und damit zweikanaligen Lautsprecherkonfiguration, als auch mit mehr Lautsprechern wiedergegeben werden können. Dies soll anhand des nachfolgenden Beispiels genauer veranschaulicht werden.

Bei einem mehrkanaligen Quellensignal sind neben einem Links- (L) und Rechts-(R) -Kanal mehrere zusätzliche Tonkanäle Z1, Z2 und Z3 vorhanden, z.B. ein Mittenkanal, ein hinterer Links-Kanal und ein hinterer Rechts-Kanal. Die beiden hinteren Kanäle enthalten häufig Rauminformation sowie Effektinformation. Bei einem stereophonen Quellensignal dagegen sind derartige Raum- und Effektinformationen - generell sämtliche Signale - in irgendeinem Verhältnis in den allein vorhandenen LO und RO -Kanälen enthalten. Bei einer stereophonen Wiedergabe können nur diese beiden Kanäle (LO und RO) wiedergegeben werden.

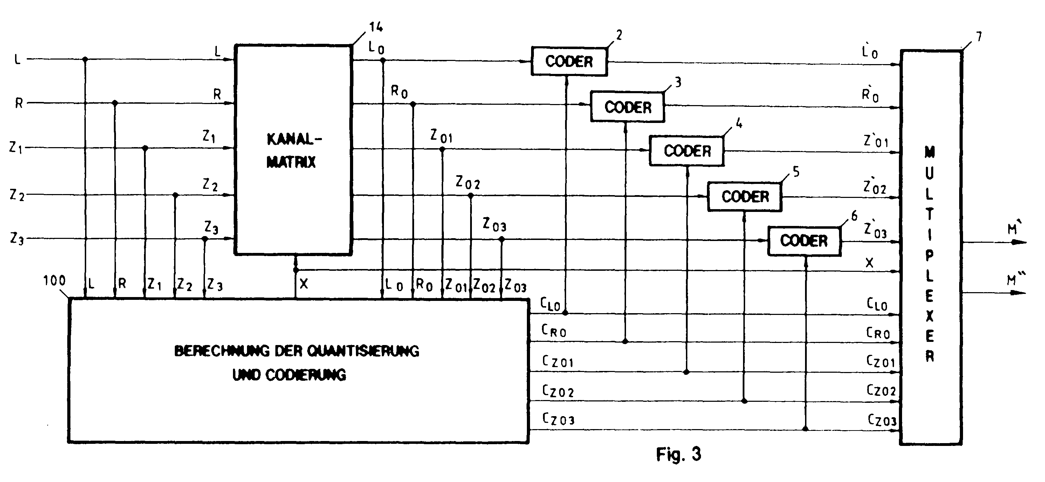

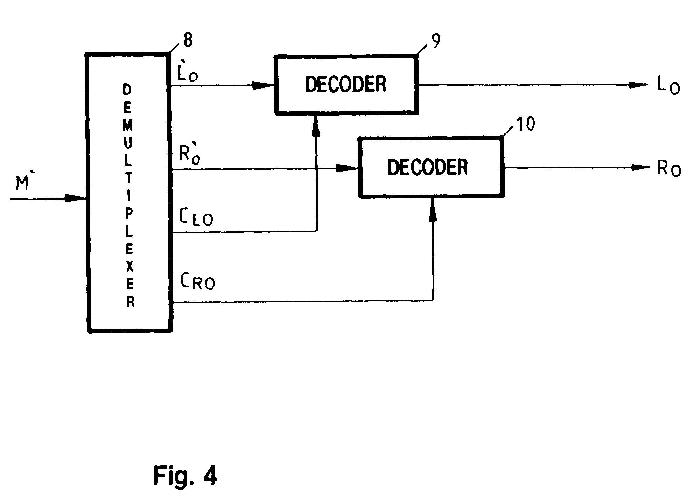

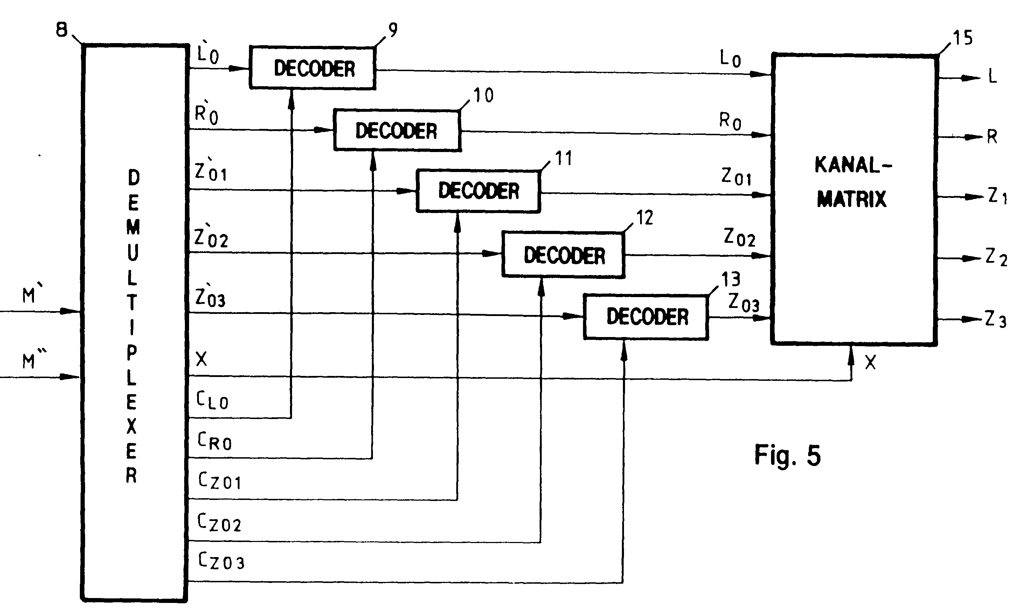

Um eine Kompatibilität zwischen mehrkanaliger und stereophoner Technik zu erreichen, kann ein stereokompatibler mehrkanaliger Quellencoder zur Codierung von mehrkanaligen Tonsignalen verwendet werden, wie er in Fig. 3 gezeigt ist. Neu eingeführt ist hier gegenüber Fig. 1 die Kanalmatrix 14, innerhalb welcher die zusätzlichen Tonkanäle Z1, Z2 und Z3 den beiden Basiskanälen L und R in geeigneter Weise zugeschlagen werden, um die Tonsignale LO und RO zu erhalten, die einem üblichen stereophonen Tonsignal entsprechen. Dieses kann später mittels eines nur stereophonen Quellendecoders, wie beispielhaft in Fig. 4 gezeigt, am Empfangsort z.B. mit zwei Lautsprechern wiedergegeben werden, wobei die wiedergegebenen Tonsignale LO und RO nicht nur die Tonsignale L und R, sondern auch der zusätzlichen Tonsignale Z1, Z2 und Z3 in geeigneter Form enthalten. Außerdem kann eine mehrkanalige Wiedergabe mit Hilfe eines stereokompatiblen mehrkanaligen Quellendecoders (Fig. 5) erfolgen, wie später erläutert werden soll.

Im stereokompatiblen mehrkanaligen Quellencoder nach Fig. 3 kann zur Berechnung der Quantisierungs- und Codierungsvorschriften CLO, CRO, CZ01, CZ02 und CZ03 in Block 100 gegenüber dem Block 1 in Fig. 1 nicht nur die Verdeckung ermittelt werden, die die Tonkanäle L, R, Z1, Z2 und Z3 bei gleichzeitiger Wiedergabe aller Tonkanäle auf jeden einzelnen dieser Tonkanäle ausüben, sondern auch die Verdeckung, die jeder der beiden Tonkanäle LO und RO auf den jeweils anderen Kanal ausübt, und zwar für den Fall, daß zur Reproduktion der Schallsignale nur eine zweikanalige stereophone Wiedergabe der Tonsignale LO und RO erfolgt. Zur endgültigen Berechnung der Codierungvorschriften CLO und CRO für die Codierung der Tonsignale LO und RO kann dann die jeweils geringere Verdeckungswirkung zugrunde gelegt werden, wodurch sowohl für den Fall der mehrkanaligen als auch für den Fall der stereophonen Wiedergabe eine ausreichende Quantisierung gewährleistet werden kann.

In der Kanalmatrix 14 des mehrkanaligen Quellenencoders nach Fig. 3 kann nicht nur der Signalinhalt der Tonsignale LO und RO, wie vorher beschrieben, aus den Eingangssignalen L, R, Z1, Z2 und Z3 durch Matrizierung gebildet werden, sondern auch der Tonsignalinhalt der zusätzlichen Tonkanäle Z1, Z2 und Z3 beliebig sowohl untereinander als auch mit den Tonsignalen L und R matriziert werden. Die in der Kanalmatrix 14 jeweils zu verwendende Matrizierungsart wird dazu in Block 100 des mehrkanaligen Quellenencoders in Fig. 3 ermittelt. Die Ermittlung einer geeigneten Matrizierung soll nachfolgend am Beispiel für einen Mittenkanal Z1 dargelegt werden.

Ein solcher Mittenkanal Z1 könnte aus der Summe der Signalanteile L, R und Mi nach der Formel KL * L + KR * R + Mi gebildet sein, wobei die Signale L und R auch als Eingangssignale der Kanalmatrix 14 vorhanden sind, während Mi einen zusätzlichen Mitten-Signalanteil darstellt. KR und KL sind Gewichtungs-Faktoren und eventuell Phasen- oder Zeitverschiebungen. Zur Verringerung der zu codierenden Datenmenge im Tonsignal Z01 kann in diesem Fall in der Kanalmatrix 14 eine Matrizierung so erfolgen, daß aus dem Tonsignal Z01 die Signalanteile L und R, die im Signal Z1 noch enthalten sind, entfernt werden, wodurch das zu codierende Tonsignal Z01 nur noch aus dem Mitten-Signalanteil Mi besteht, und im Coder 4 mit geringerer Datenrate codiert werden kann als wenn direkt das Signal Z1 codiert worden wäre.

Eine hierfür geeignete Matrizierung kann in Block 100 aufgund der Untersuchung der Einganssignale L, R, Z1, Z2 und Z3 gefunden werden und als Matrizierungsanweisung X sowohl an die Kanalmatrix 14 als auch an den Multiplexer 7 weitergeleitet werden. Im Multiplexer 7 können entweder alle zu übertragenden Signale zu einem gemeinsamen Multiplexsignal zusammengefügt werden oder aber je nach Kompatibilitäts-Erfordernissen zu mehreren Multiplexsignalen. Im Beispiel des stereokompatiblen mehrkanaligen Quellendecoders nach Fig. 3 werden die codierten Tonsignale LO' und RO' sowie die zugehörigen Codierungvorschriften CLO und CRO zum einem standardisierten, für stereophone Wiedergabe vorgesehenen Multiplexsignal M' zusammengefügt, während die Matrizierungsanweisung X zusammen mit den übrigen Signalen Z01', Z02' und Z03' und den dazugehörigen Codierungsvorschriften CZ01, CZ02 und CZ03 zum Multiplexsignal M" zusammengefügt wird.

In Fig. 5 ist das Blockschaltbild eines stereokompatiblen mehrkanaligen Quellendecoders dargestellt. Neu eingführt ist hier gegenüber dem Quellendecoder in Fig. 2 die Kanalmatrix 15, welche unter Zuhilfenahme der Matrizierungsanweisung X aus den für stereophone Wiedergabe vorgesehenen Tonsignalen LO und RO wieder die ursprünglichen Tonsignale L, R, sowie aus den Signalen Z01, Z02 und Z03 die Tonsignale Z1, Z2 und Z3 erzeugt, welche zusammen mehrkanalig wiedergegeben werden können.

Die sich ergebenden Vorteile des erfindungsgemäßen Verfahrens sind:
- Für die Übertragung des mehrkanaligen Tonsignales ist im Verhältnis zur zusätzlichen Kanalanzahl nur eine geringe zusätzliche Datenrate erforderlich.
- Die Wiedergabe von mehrkanalig übertragenen oder gespeicherten Tonsignalen kann mit bereits vorher existierenden stereophonen Empfängern erfolgen. Es ist somit eine Abwärtskompatibilität eines neuen mehrkanaligen Verfahrens zu bereits eingeführten zweikanaligen Verfahren erreichbar.
- Zur Wiedergabe von mehrkanalig übertragenen oder gespeicherten Tonsignalen mit bereits vorher existierenden stereophonen Empfängern braucht im Empfänger keine Dematrizierung erfolgen. Dies führt zu kostengünstigen Empfängern für nur sterophone Wiedergabe.

## Patentansprüche

1. Verfahren zum Übertragen oder Speichern von digitalisierten, in ihrer Bitrate reduzierten Tonsignalen, **dadurch gekennzeichnet,** daß für die Bitratenreduktion von Tonsignalen mit mehr als zwei Tonkanälen (L, R, Z₁, Z₂, Z₃) für jeden einzelnen Tonkanal die psychoakustische Verdeckung durch zumindest einen Teil der übrigen Tonkanäle oder die Redundanz einzelner Tonkanäle untereinander dahingehend ausgenutzt wird, daß
- nur diejenigen Anteile des betrachteten Tonkanals übertragen bzw. gespeichert werden, welche bei den zur Auswahl stehenden Wiedergabearten nicht durch die Tonsignale anderer Tonkanäle verdeckt werden oder in den Tonkanälen für stereofone Wiedergabe enthalten sind, und
- die verwendeten Anteile nur mit einer so geringen Auflösung übertragen bzw. gespeichert werden, daß das durch die Quantisierung erzeugte Quantisierungsrauschen durch die Gesamtheit aller Tonkanäle bei den zur Auswahl stehenden Wiedergabearten verdeckt bleibt.

2. Verfahren nach Anspruch 1, **dadurch gekennzeichnet**, daß die in den mehrkanaligen Tonsignalen vorhandenen Links- und Rechtskanäle (L, R) mit den übrigen Tonkanälen (Z1, Z2, Z3) so matriziert werden, daß sich ein stereo-kompatibler Links- und Rechtskanal (Lo, Ro) ergibt und daß die Verdeckungen für eine mehrkanalige und für eine stereophone Wiedergabe berechnet werden, von denen für die Codierung der stereo-kompatiblen Links- und Rechtskanäle (Lo, Ro) sowie der übrigen Tonkanäle die jeweils geringere Verdeckung verwendet wird.

3. Verfahren nach Anspruch 2, **dadurch gekennzeichnet**, daß zumindest einer der übrigen Tonkanäle (Z1, Z2, Z3) so matriziert wird, daß die in ihm enthaltenen Informationsanteile, welche in den stereo-kompatiblen Links- und Rechtskanälen (Lo, Ro) ebenfalls vorhanden sind, ganz oder teilweise vor der Codierung oder nach teilweise erfolgter Codierung durch Matrizieren entfernt werden und daß eine Information über die coderseitig durchgeführte Matrizierung den codierten Tonsignalen hinzugefügt wird, welche bei der decoderseitigen Rekonstruktion des mehrkanaligen Tonsignals für eine entsprechende Dematrizierung verwendet wird.

4. Verfahren nach Anspruch 2, **dadurch gekennzeichnet**, daß zur Übertragung und Speicherung ein Multiplexsignal aus dem stereo-kompatiblen Links- und Rechtskanal (Lo, Ro) gebildet wird, das einem bekannten und genormten Multiplexsignal für zweikanalige codierte Tonsignale entspricht, und daß die codierten Daten der zusätzlichen Tonkanäle (Z1, Z2, Z3) in einem getrennten Multiplexsignal übertragen oder gespeichert werden.

## Claims

1. A process for the transmission or storage of digitalized sound signals with reduced bit rates, characterised by the fact that, for the bit reduction of sound signals with more than two sound channels (L, R. Z1, Z2, Z3), for each individual sound signal, psycho-acoustic masking by at least one part of the other sound channels or the redundancy of individual sound channels is fully exploited, such that
- Only those elements of the sound channel in question are transmitted or stored which, with the types of reproduction available for selection, are not masked by the sound signals of other sound channels, or are contained in the sound channels for stereophonic reproduction, and
- The elements used are transmitted or stored with such low resolution that the quantisation noise created by the quantisation process from the totality of all the sound channels remains masked with the types of reproduction available for selection.

2. A process according to Claim 1, characterised by the fact that the left and right channels (L, R) which are present in the multi-channel sound signals are matricised with the other sound channels (Z1, Z2, Z3) in such a way that a stereo-compatible left and right channel (Lo, Ro) is derived, and that the masking effects for a multichannel and for a stereophonic reproduction are calculated, the lower masking effect of which is used for the encoding of the stereo-compatible left and right channels (Lo, Ro), as well as of the other sound channels.

3. A process according to Claim 2, characterised by the fact that at least one of the other sound channels (Z1, Z2, Z3) are matricised in such a way that the information elements contained in them, which are likewise contained in the stereo-compatible left and right channels (Lo, Ro) are removed entirely or in part, prior to the encoding or after partially effected encoding, by means of matricisation, and that information about the encoder-side matricisation is added to the encoded sound signals, which are used in the decoder-side reconstruction of the multi-channel sound signal for corresponding dematricisation.

4. A process according to Claim 2, characterised by the fact that, for transmission and storage, a multiplex signals is formed from the stereo-compatible left and right channel (Lo, Ro), which corresponds to a known and standardised multiplex signal for two-channel encoded sound signals, and that the encoded data of the additional sound channels (Z1, Z2, Z3) are transmitted or stored in a separate multiplex signal.

## Revendications

1. Procédé pour la transmission ou la mise en mémoire de signaux audio numérisés et dont le nombre ou débit de chiffres binaires est réduit, caractérisé en ce que, pour la réduction du débit binaire de signaux audio avec plus de deux canaux audio (L, R, Z1, Z2, Z3), pour chaque canal audio individuel, le masquage psycho-acoustique utilise, de façon combinée, au moins une partie des autres canaux audio ou la redondance des canaux audio individuels, et en ce que
- seules sont transmises ou mises en mémoire celles des parties du canal audio considéré qui, pour un choix donné du type de reproduction, ne sont pas masquées par les signaux audio d'autres canaux audio ou qui ne sont pas contenues dans les canaux audio pour une reproduction stéréophonique, et
- les parties utilisées sont transmises ou mises en mémoire avec une résolution suffisamment faible pour que le bruit de quantification, créé par la quantification, reste masqué pour l'ensemble des canaux audio avec le choix donné du type de reproduction.

2. Procédé selon la revendication 1, caractérisé en ce que les canaux droite et gauche (L, R) se trouvant dans les signaux audio à plusieurs canaux sont combinés matriciellement avec les autres canaux (Z1, Z2, Z3) de façon telle qu'il en résulte un canal droite et gauche (L0, R0) stéréo-compatible et en ce que les masquages sont calculés pour une reproduction multicanal et pour une reproduction stéréophonique, les masquages étant tels qu'on utilise, pour le codage des canaux gauche et droite stéréo-compatibles (L0, R0) ainsi que des canaux audio restants, à chaque fois, le masquage le plus faible.

3. Procédé selon la revendication 2, caractérisé en ce qu'au moins l'un des canaux audio restants (Z1, Z2, Z3) est combiné matriciellement de façon que les parties d'informations qu'il contient, et qui se trouvent déjà dans les canaux gauche et droite (L0, R0) stéréo-compatibles, sont éliminées par matriçage de façon totale ou partielle avant le codage ou après le codage effectué de façon partielle, et en ce qu'une information sur la combinaison matricielle effectuée du côté du codeur est jointe aux signaux audio codés, cette information étant utilisée, lors de la reconstitution du signal audio multicanal du côté du décodeur, pour un dématriçage correspondant.

4. Procédé selon la revendication 2, caractérisé en ce que, pour la transmission et la mise en mémoire, on forme un signal multiplex à partir du canal gauche et droite (L0, R0) stéréo-compatible, en ce qu'à un signal multiplex connu et normalisé, correspond un signal audio codé pour deux canaux audio, et en ce que les données codées des canaux audio supplémentaires (Z1, Z2, Z3) sont transmises ou mises en mémoire dans un signal multiplex séparé.
